# EUROPEAN PATENT SPECIFICATION

(11) **EP 0 714 382 B1**
(45) Date of publication and mention of the grant of the patent: **29.04.1998**
(21) Application number: 95924289.2
(22) Date of filing: 19.06.1995
(51) Int. Cl.: C03C 13/00, C03C 13/06

(54) **MINERAL-FIBER COMPOSITIONS**
MINERALFASERZUSAMMENSETZUNGEN
COMPOSITIONS DE FIBRES MINERALES

(30) Priority: 19.06.1994 DE 4421120; 01.02.1995 DE 19503170
(43) Date of publication of application: 05.06.1996
(73) Proprietor: ISOVER SAINT-GOBAIN, 92400 Courbevoie (FR)
(72) Inventor: BERNARD, Jean, Luc, F-60600 Clermont (FR); DE MERINGO, Alain, F-75005 Paris (FR); ROUYER, Elisabeth, F-92600 Asnières (FR); FURTAK, Hans, D-67346 Speyer am Rhein (DE)
(74) Representative: Kador & Partner
(86) International application number: EP9502375
(87) International publication number: WO9535265

(56) References cited:
- EP-A- 0 019 600
- EP-A- 0 399 320
- EP-A- 0 412 878
- GLASTECHNISCHE BERICHTE, vol. 64, no. 1, January 1991 FRANKFURT DE, pages 16-28, XP 000178832 R. M. POTTER ET AL 'Glass Fiber Dissolution in a Physiological Saline Solution'

## Description

The present invention relates to a mineral-fiber composition that is biologically degradable.

The prior art describes some mineral-fiber compositions which are said to be biologically degradable.

The biological degradability of mineral-fiber compositions is of great importance because various studies point out that mineral fibers with very small diameters in the range of less than 3 microns can be carcinogenic, while biologically degradable mineral fibers of such dimensions show no carcinogenicity.

However not only the biological degradability is of crucial importance but also the mechanical and thermal properties of the mineral fibers, or the products produced therefrom, the resistance of the mineral fibers and the processibility of the mineral-fiber composition.

For example mineral fibers are used to a great extent for insulation purposes. For these applications sufficient moisture-resistance is necessary.

Also, the mineral-fiber composition must permit processibility by known methods for producing mineral fibers with a small diameter, for example the centrifugal technique, in particular the inner centrifugal technique (this technique is described for example in US-PS 4 203 745).

EP-A-19 600 describes biodegradable fibres comprising 55 - 65 % SiO2, 1 - 2 % Al2O3, 6 - 9.5 % CaO, 1 - 4.5 % MgO and 13 - 17 % Na2O, 1 - 7 % B2O3 and 0.5 - 6 % ZnO.

EP-A-399 320 describes biodegradable fibres comprising (in mole %) 55 - 70 % SiO2, 0 - 3 % Al2O3, 8 - 24 % CaO, 0 - 5 % MgO, 10 - 20 % Na2O and 0 - 5 % B2O3.

EP-A-412 878 describes biodegradable fibres comprising 57 - 70 % SiO2, 0 - 5 % Al2O3, 5 - 10 % CaO, 0 - 5 % MgO, 13 - 18 % Na2O and 2 - 12 %% B2O3.

Glastechnische Berichte, vol. 64, no. 1, 1991, pages 16 - 28 describes biodegradable fibres comprising SiO2, Al2O3, CaO, MgO, Na2O and B2O3.

The invention is based on the problem of providing a novel mineral-fiber composition that is characterized by biological degradability, has good stability or resistance to moisture and is easy to process.

The invention is based on the finding that this problem can be solved by a mineral-fiber composition that has considerable amounts of alkali oxides and alkaline-earth oxides, and optionally phosphorus oxide.

It has turned out that such a mineral-fiber composition fulfills the combination of the necessary properties, namely biological degradability, resistance to moisture and good processibility.

The object of the invention is a mineral-fiber composition that is biologically degradable, characterized by the following constituents in percent by weight:

| | |
|---|---|
| SiO₂ | 45 to 60 |
| Al₂O₃ | less than 2 |
| CaO | 7 to 18 |
| MgO | 4 to 10 |
| Na₂O | 7 to 20 |
| K₂O | 0 to 4 |
| B₂O₃ | 1 to 12 |
| P₂O₅ | 0 to 4 |
| Diverse | 0 to 5 |
| Na₂O + K₂O | 7 to 24 |
| CaO + MgO | more than 15.5 and up to 25 |
| BaO | 0 to 5 |
| TiO₂ | 0 to 4 |
| Cr₂O₃ | 0 to 1.5 |
| Fe₂O₃ | 0 to 3. |

The inventive mineral-fiber compositions are processible by the centrifugal technique. The obtained fibers have good resistance to moisture. Surprisingly enough, the mineral-fiber compositions show biological degradability. The mean fiber diameter is preferably 10 microns or less, and is in particular between 2.5 and 5 microns.

The inventive mineral-fiber compositions preferably have the following constituents in percent by weight:

| | |
|---|---|
| SiO₂ | 50 to 58 |
| Al₂O₃ | less than 2 |
| CaO | 10 to 18 |
| MgO | 4 to 8 |
| Na₂O | 10 to 18 |
| K₂O | 0 to 2 |
| B₂O₃ | 3 to 12 |
| P₂O₅ | 0.5 to 4 |
| Diverse | 0 to 2 |
| Na₂O + K₂O | 10 to 21 |
| CaO + MgO | 16 to 24 |
| BaO | 0 to 4 |
| TiO₂ | 0 to 3 |
| Cr₂O₃ | 0 to 1 |
| Fe₂O₃ | 0 to 2. |

The inventive mineral-fiber compositions have in particular the following constituents in percent by weight:

| | |
|---|---|
| SiO₂ | 50 to 57 |
| Al₂O₃ | 0.5 to 1.5 |
| CaO | 11 to 16 |
| MgO | 4.5 to 6 |
| Na₂O | 12 to 17 |
| K₂O | 0.5 to 1 |
| B₂O₃ | 5 to 11 |
| P₂O₅ | 1 to 3 |
| Diverse | 0.5 to 1.0 |
| Na₂O + K₂O | 11 to 17 |
| CaO + MgO | 16 to 22 |
| BaO | 0 to 3 |
| TiO₂ | 0 to 2 |
| Cr₂O₃ | 0 to 0.5 |
| Fe₂O₃ | 0 to 1.5. |

The inventive mineral-fiber compositions preferably have less than 55% silicon dioxide.

It is also particularly preferred that the compositions contain more than 5 percent by weight, in particular more than 6 percent by weight, magnesium oxide.

Barium oxide is preferably added in exchange for calcium oxide.

Biological degradability can be increased by adding phosphorus pentoxide. The inventive compositions therefore preferably contain at least 0.5 percent by weight P₂O₅.

It is advantageous to add titanium oxide, chromium oxide and/or iron oxide to reduce the corrosive properties of the melt.

The moisture-resistance of the inventive mineral-fiber compositions was determined by a standard method known as the DGG method. In the DGG method 10 g finely ground mineral with a grain size between about 360 and 400 microns is held at the boiling point for five hours in 100 ml water. After quick cooling of the material the solution is filtered and a certain volume of the filtrate evaporated to dryness. The weight of the thus obtained dry material permits the amount of mineral dissolved in the water to be calculated. The amount is stated in milligrams per gram of tested mineral.

The biological degradability of the inventive mineral compositions was tested by introducing 1 g of the mineral powder, as described for the DGG method, into a physiological solution with the composition stated below and a pH value of 7.4:

| | |
|---|---|
| NaCl | 6.78 |
| NH₄Cl | 0.535 |
| NaHCO₃ | 2.268 |
| NaH₂PO₄H₂O | 0.166 |
| (Na₃ citrate) 2H₂O | 0.059 |
| Glycine | 0.450 |
| H₂SO₄ | 0.049 |
| CaCl₂ | 0.022 |

Dynamic test conditions were selected as are described in Scholze and Conradt. The flow rate was 300 ml/day. The duration of the test was 14 days. The results are stated as percent of SiO₂ in the solution x 100 after 14 days.

The invention shall be described in more detail in the following with reference to examples.

### Example 1

A composition was produced with the following constituents in percent by weight:

| | |
|---|---|
| SiO₂ | 56 |
| Al₂O₃ | 0.5 |
| CaO | 15 |
| MgO | 4.0 |
| Na₂O | 16.2 |
| K₂O | 0.8 |
| B₂O₃ | 5.5 |
| P₂O₅ | 1.5 |
| Diverse | 0.5. |

This mineral composition could be processed by the centrifugal technique.

Using the above-described DGG method a value of 32 mg/g was determined.

The above-described test for biological degradability yielded a value of 615.

### Example 2

A composition was produced with the following constituents in percent by weight:

| | |
|---|---|
| SiO₂ | 54.5 |
| Al₂O₃ | 0.5 |
| CaO | 15 |
| MgO | 4.0 |
| Na₂O | 16.2 |
| K₂O | 0.8 |
| B₂O₃ | 5.5 |
| P₂O₅ | 3.0 |
| Diverse | 0.5. |

This mineral composition could be processed by the centrifugal technique.

Using the above-described DGG method a value of 32 mg/g was determined.

The above-described test for biological degradability yielded a value of 690.

### Example 3

A composition was produced with the following constituents in percent by weight:

| | |
|---|---|
| SiO₂ | 56 |
| Al₂O₃ | 0.5 |
| CaO | 13 |
| MgO | 6 |
| Na₂O | 16.2 |
| K₂O | 0.8 |
| B₂O₃ | 5.5 |
| P₂O₅ | 1.5 |
| Diverse | 0.5. |

This mineral composition could be processed by the centrifugal technique.

Using the above-described DGG method a value of 32 mg/g was determined.

The above-described test for biological degradability yielded a value of 615.

### Example 4

A composition was produced with the following constituents in percent by weight:

| | |
|---|---|
| SiO₂ | 54.5 |
| Al₂O₃ | 0.5 |
| CaO | 13 |
| MgO | 6 |
| Na₂O | 16.2 |
| K₂O | 0.8 |
| B₂O₃ | 5.5 |
| P₂O₅ | 3 |
| Diverse | 0.5. |

This mineral composition could be processed by the centrifugal technique.

Using the above-described DGG method a value of 32 mg/g was determined.

The above-described test for biological degradability yielded a value of 690.

### Example 5

A composition was produced with the following constituents in percent by weight:

| | |
|---|---|
| SiO₂ | 56 |
| Al₂O₃ | 0.5 |
| CaO | 16 |
| MgO | 6 |
| Na₂O | 13.2 |
| K₂O | 0.8 |
| B₂O₃ | 5.5 |
| P₂O₅ | 1.5 |
| Diverse | 0.5. |

This mineral composition could be processed by the centrifugal technique.

Using the above-described DGG method a value of 22 mg/g was determined.

The above-described test for biological degradability yielded a value of 585.

### Example 6

A composition was produced with the following constituents in percent by weight:

| | |
|---|---|
| SiO₂ | 54.5 |
| Al₂O₃ | 0.5 |
| CaO | 16 |
| MgO | 6 |
| Na₂O | 13.2 |
| K₂O | 0.8 |
| B₂O₃ | 5.5 |
| P₂O₅ | 3 |
| Diverse | 0.5. |

This mineral composition could be processed by the centrifugal technique.

Using the above-described DGG method a value of 22 mg/g was determined.

The above-described test for biological degradability yielded a value of 660.

### Example 7

A composition was produced with the following constituents in percent by weight:

| | |
|---|---|
| SiO₂ | 54.5 |
| Al₂O₃ | 1 |
| CaO | 16 |
| MgO | 6 |
| Na₂O | 13.2 |
| K₂O | 0.8 |
| B₂O₃ | 6.5 |
| P₂O₅ | 1.5 |
| Diverse | 0.5. |

This mineral composition could be processed by the centrifugal technique.

Using the above-described DGG method a value of 17 mg/g was determined.

The above-described test for biological degradability yielded a value of 570.

### Example 8

A composition was produced with the following constituents in percent by weight:

| | |
|---|---|
| SiO₂ | 53 |
| Al₂O₃ | 1 |
| CaO | 16 |
| MgO | 6 |
| Na₂O | 13.2 |
| K₂O | 0.8 |
| B₂O₃ | 6.5 |
| P₂O₅ | 3 |
| Diverse | 0.5. |

This mineral composition could be processed by the centrifugal technique.

Using the above-described DGG method a value of 17 mg/g was determined.

The above-described test for biological degradability yielded a value of 645.

### Example 9

A composition was produced with the following constituents in percent by weight:

| | |
|---|---|
| SiO₂ | 50.5 |
| Al₂O₃ | 1.5 |
| CaO | 16 |
| MgO | 8 |
| Na₂O | 12.2 |
| K₂O | 0.8 |
| B₂O₃ | 6.5 |
| P₂O₅ | 4 |
| Diverse | 0.5. |

This mineral composition could be processed by the centrifugal technique.

Using the above-described DGG method a value of 7 mg/g was determined.

The above-described test for biological degradability yielded a value of 660.

### Example 10

A composition was produced with the following constituents in percent by weight:

| | |
|---|---|
| SiO₂ | 50.5 |
| Al₂O₃ | 1.5 |
| CaO | 18 |
| MgO | 6 |
| Na₂O | 10.7 |
| K₂O | 0.8 |
| B₂O₃ | 8 |
| P₂O₅ | 4 |
| Diverse | 0.5. |

This mineral composition could be processed by the centrifugal technique.

Using the above-described DGG method a value of 7 mg/g was determined.

The above-described test for biological degradability yielded a value of 660.

### Example 11

A composition was produced with the following constituents in percent by weight:

| | |
|---|---|
| SiO₂ | 55 |
| Al₂O₃ | 1 |
| CaO | 11 |
| MgO | 5 |
| Na₂O | 14.2 |
| K₂O | 0.8 |
| B₂O₃ | 11.5 |
| P₂O₅ | 1 |
| Diverse | 0.5. |

This mineral composition could be processed by the centrifugal technique.

Using the above-described DGG method a value of 31 mg/g was determined.

The above-described test for biological degradability yielded a value of 600.

### Example 12

A composition was produced with the following constituents in percent by weight:

| | |
|---|---|
| SiO₂ | 56.5 |
| Al₂O₃ | 0.5 |
| CaO | 11 |
| MgO | 5 |
| Na₂O | 14.2 |
| K₂O | 0.8 |
| B₂O₃ | 10.5 |
| P₂O₅ | 1 |
| Diverse | 0.5. |

This mineral composition could be processed by the centrifugal technique.

Using the above-described DGG method a value of 36 mg/g was determined.

The above-described test for biological degradability yielded a value of 620.

### Example 13

A composition was produced with the following constituents in percent by weight:

| | |
|---|---|
| SiO₂ | 58.0 |
| Al₂O₃ | 0.5 |
| CaO | 13.0 |
| MgO | 7.0 |
| Na₂O + K₂O | 13.5 |
| B₂O₃ | 8.0. |

This mineral composition could be processed by the centrifugal technique.

Using the above-described DGG method a value of 21 mg/g was determined.

The above-described test for biological degradability yielded a value of 515.

### Example 14

A composition was produced with the following constituents in percent by weight:

| | |
|---|---|
| SiO₂ | 57.0 |
| Al₂O₃ | 0.5 |
| Fe₂O₃ | 1.0 |
| CaO | 13.0 |
| MgO | 7.0 |
| Na₂O + K₂O | 13.5 |
| B₂O₃ | 8.0. |

This mineral composition could be processed by the centrifugal technique.

Using the above-described DGG method a value of 22 mg/g was determined.

The above-described test for biological degradibilty yielded a value of 480.

### Example 15

A composition was produced with the following constituents in percent by weight:

| | |
|---|---|
| SiO₂ | 58.0 |
| Al₂O₃ | 0.5 |
| CaO | 9.5 |
| MgO | 7.0 |
| Na₂O + K₂O | 17.0 |
| B₂O₃ | 8.0. |

This mineral composition could be processed by the centrifugal technique.

Using the above-described DGG method a value of 36 mg/g was determined.

The above-described test for biological degradability yielded a value of 550.

### Example 16

A composition was produced with the following constituents in percent by weight:

| | |
|---|---|
| SiO₂ | 58.0 |
| Al₂O₃ | 0 5 |
| CaO | 13.0 |
| MgO | 7.0 |
| Na₂O + K₂O | 17.0 |
| B₂O₃ | 4.5. |

This mineral composition could be processed by the centrifugal technique.

Using the above-described DGG method a value of 27 mg/g was determined.

The above-described test for biological degradability yielded a value of 515.

### Example 17

A composition was produced with the following constituents in percent by weight:

| | |
|---|---|
| SiO₂ | 57.5 |
| Al₂O₃ | 0.5 |
| CaO | 13.5 |
| MgO | 6.5 |
| Na₂O + K₂O | 17.0 |
| B₂O₃ | 4.5 |
| Cr₂O₃ | 0.5. |

This mineral composition could be processed by the centrifugal technique.

Using the above-described DGG method a value of 25 mg/g was determined.

The above-described test for biological degradability yielded a value of 490.

## Claims

1. A mineral-fiber composition that is biologically degradable, characterized by the following constituents in percent by weight:
| | |
|---|---|
| SiO₂ | 45 to 60 |
| Al₂O₃ | less than 2 |
| CaO | 7 to 18 |
| MgO | 4 to 10 |
| Na₂O | 7 to 20 |
| K₂O | 0 to 4 |
| B₂O₃ | 1 to 12 |
| P₂O₅ | 0 to 4 |
| Diverse | 0 to 5 |
| Na₂O + K₂O | 7 to 24 |
| CaO + MgO | more than 15.5 and up to 25 |
| BaO | 0 to 5 |
| TiO₂ | 0 to 4 |
| Cr₂O₃ | 0 to 1.5 |
| Fe₂O₃ | 0 to 3. |

2. The mineral-fiber composition of claim 1, characterized by the following constituents in percent by weight:
| | |
|---|---|
| SiO₂ | 50 to 58 |
| Al₂O₃ | less than 2 |
| CaO | 10 to 18 |
| MgO | 4 to 8 |
| Na₂O | 10 to 18 |
| K₂O | 0 to 2 |
| B₂O₃ | 3 to 12 |
| P₂O₅ | 0.5 to 4 |
| Diverse | 0 to 2 |
| Na₂O + K₂O | 10 to 21 |
| CaO + MgO | 16 to 24 |
| BaO | 0 to 4 |
| TiO₂ | 0 to 3 |
| Cr₂O₃ | 0 to 1 |
| Fe₂O₃ | 0 to 2. |

3. The mineral-fiber composition of claim 1 or 2, characterized by the following constituents in percent by weight:
| | |
|---|---|
| SiO₂ | 50 to 57 |
| Al₂O₃ | 0.5 to 1.5 |
| CaO | 11 to 16 |
| MgO | 4.5 to 6 |
| Na₂O | 12 to 17 |
| K₂O | 0.5 to 1 |
| B₂O₃ | 5 to 11 |
| P₂O₅ | 1 to 3 |
| Diverse | 0.5 to 1.0 |
| Na₂O + K₂O | 11 to 17 |
| CaO + MgO | 16 to 22 |
| BaO | 0 to 3 |
| TiO₂ | 0 to 2 |
| Cr₂O₃ | 0 to 0.5 |
| Fe₂O₃ | 0 to 1.5. |

4. The mineral-fiber composition of any of claims 1 to 3, characterized in that the content of silicon dioxide is less than 55 percent by weight.

5. The mineral-fiber composition of any of claims 1 to 4, characterized in that the content of magnesium oxide is more than 5 percent by weight.

6. The mineral-fiber composition of any of claims 1 to 5, characterized in that the content of magnesium oxide is more than 6 percent by weight.

## Patentansprüche

1. Eine Mineralfaserzusammensetzung, die biologisch abbaubar ist, gekennzeichnet durch die folgenden Bestandteile in Gewichtsprozent:
| | |
|---|---|
| SiO₂ | 45 bis 60 |
| Al₂O₃ | weniger als 2 |
| CaO | 7 bis 18 |
| MgO | 4 bis 10 |
| Na₂O | 7 bis 20 |
| K₂O | 0 bis 4 |
| B₂O₃ | 1 bis 12 |
| P₂O₅ | 0 bis 4 |
| Diverse | 0 bis 5 |
| Na₂O + K₂O | 7 bis 24 |
| CaO + MgO | mehr als 15,5 und bis zu 25 |
| BaO | 0 bis 5 |
| TO₂ | 0 bis 4 |
| Cr₂O₃ | 0 bis 1,5 |
| Fe₂O₃ | 0 bis 3. |

2. Die Mineralfaserzusammensetzung nach Anspruch 1., gekennzeichnet durch die folgenden Bestandteile in Gewichtsprozent:
| | |
|---|---|
| SiO₂ | 50 bis 58 |
| Al₂O₃ | weniger als 2 |
| CaO | 10 bis 18 |
| MgO | 4 bis 8 |
| Na₂O | 10 bis 18 |
| K₂O | 0 bis 2 |
| B₂O₃ | 3 bis 12 |
| P₂O₅ | 0,5 bis 4 |
| Diverse | 0 bis 2 |
| Na₂O + K₂O | 10 bis 21 |
| CaO + MgO | 16 bis 24 |
| BaO | 0 bis 4 |
| TiO₂ | 0 bis 3 |
| Cr₂O₃ | 0 bis 1 |
| Fe₂O₃ | 0 bis 2. |

3. Die Mineralfaserzusammensetzung nach den Ansprüchen 1. oder 2., gekennzeichnet durch die folgenden Bestandteile in Gewichtsprozent:
| | |
|---|---|
| SiO₂ | 50 bis 57 |
| Al₂O₃ | 0,5 bis 1,5 |
| CaO | 11 bis 16 |
| MgO | 4,5 bis 6 |
| Na₂O | 12 bis17 |
| K₂O | 0,5 bis 1 |
| B₂O₃ | 5 bis 11 |
| P₂O₅ | 1 bis 3 |
| Diverse | 0,5 bis 1,0 |
| Na₂O + K₂O | 11 bis 17 |
| CaO + MgO | 16 bis 22 |
| BaO | 0 bis 3 |
| TO₂ | 0 bis 2 |
| Cr₂O₃ | 0 bis 0,5 |
| Fe₂O₃ | 0 bis 1,5. |

4. Die Mineralfaserzusammensetzung nach jedem der Ansprüche 1. bis 3., dadurch gekennzeichnet, daß der Anteil Siliciumdioxid weniger als 55 Gewichtsprozent ist.

5. Die Mineralfaserzusammensetzung nach jedem der Ansprüche 1. bis 4., dadurch gekennzeichnet, daß der Anteil Magnesiumoxid mehr als 5 Gewichtsprozent ist.

6. Die Mineralfaserzusammensetzung nach jedem der Ansprüche 1. bis 5., dadurch gekennzeichnet, daß der Anteil Magnesiumoxid mehr als 6 Gewichtsprozent ist.

## Revendications

1. Composition de fibres minérales qui est biologiquement dégradable, caractérisée par les constituants suivants en pourcentage en poids :
| | |
|---|---|
| SiO₂ | 45 à 60 |
| Al₂O₃ | inférieur à 2 |
| CaO | 7 à 18 |
| MgO | 4 à 10 |
| Na₂O | 7 à 20 |
| K₂O | 0 à 4 |
| B₂O₃ | 1 à 12 |
| P₂O₅ | 0 à 4 |
| Divers | 0 à 5 |
| Na₂O + K₂O | 7 à 24 |
| CaO + MgO | supérieur à 15,5 et jusqu'à 25 |
| BaO | 0 à 5 |
| TiO₂ | 0 à 4 |
| Cr₂O₃ | 0 à 1,5 |
| Fe₂O₃ | 0 à 3 |

2. Composition de fibres minérales selon la revendication 1, caractérisée par les constituants suivants en pourcentage en poids :
| | |
|---|---|
| SiO₂ | 50 à 58 |
| Al₂O₃ | inférieur à 2 |
| CaO | 10 à 18 |
| MgO - | 4 à 8 |
| Na₂O | 10 à 18 |
| K₂O | 0 à 2 |
| B₂O₃ | 3 à 12 |
| P₂O₅ | 0,5 à 4 |
| Divers | 0 à 2 |
| Na₂O + K₂O | 10 à 21 |
| CaO + MgO | 16 à 24 |
| BaO | 0 à 4 |
| TiO₂ | 0 à 3 |
| Cr₂O₃ | 0 à 1 |
| Fe₂O₃ | 0 à 2 |

3. Composition de fibres minérales selon la revendication 1 ou 2, caractérisée par les constituants suivants en pourcentage en poids :
| | |
|---|---|
| SiO₂ | 50 à 57 |
| Al₂O₃ | 0,5 à 1,5 |
| CaO | 11 à 16 |
| MgO | 4,5 à 6 |
| Na₂O | 12 à 17 |
| K₂O | 0,5 à 1 |
| B₂O₃ | 5 à 11 |
| P₂O₅ | 1 à 3 |
| Divers | 0,5 à 1,0 |
| Na₂O + K₂O | 11 à 17 |
| CaO + MgO | 16 à 22 |
| BaO | 0 à 3 |
| TiO₂ | 0 à 2 |
| Cr₂O₃ | 0 à 0,5 |
| Fe₂O₃ | 0 à 1,5 |

4. Composition de fibres minérales selon l'une quelconque des revendications 1 à 3, caractérisée en ce que la teneur en dioxyde de silicium est inférieure à 55 pour cent en poids.

5. Composition de fibres minérales selon l'une quelconque des revendications 1 à 4, caractérisée en ce que la teneur en oxyde de magnésium est supérieure à 5 pour cent en poids.

6. Composition de fibres minérales selon l'une quelconque des revendications 1 à 5, caractérisée en ce que la teneur en oxyde de magnésium est supérieure à 6 pour cent en poids.
